# EUROPÄISCHE PATENTSCHRIFT

(11) **EP 4 470 521 B1**
(45) Veröffentlichungstag und Bekanntmachung des Hinweises auf die Patenterteilung: **28.01.2026**
(21) Anmeldenummer: 23177029.8
(22) Anmeldetag: 02.06.2023
(51) Int. Cl.: A61J 3/07, G01G 15/00

(54) **KAPSELFÜLLMASCHINE UND VERFAHREN ZUM BETRIEB EINER KAPSELFÜLLMASCHINE**
CAPSULE FILLING MACHINE AND METHOD FOR OPERATING A CAPSULE FILLING MACHINE
MACHINE DE REMPLISSAGE DE CAPSULES ET PROCÉDÉ DE FONCTIONNEMENT D'UNE MACHINE DE REMPLISSAGE DE CAPSULES

(43) Veröffentlichungstag der Anmeldung: 04.12.2024
(73) Patentinhaber: Harro Höfliger Verpackungsmaschinen GmbH, 71573 Allmersbach im Tal (DE)
(72) Erfinder: Kühnert, Timo, 71573 Allmersbach im Tal (DE); Huhnen, Florian, 71573 Allmersbach im Tal (DE)
(74) Vertreter: Zurhorst, Stefan

(56) Entgegenhaltungen:
- DE-A1- 102009 028 372

## Beschreibung

Die Erfindung betrifft eine Kapselfüllmaschine mit den Merkmalen nach dem Oberbegriff des Anspruchs 1 sowie ein Verfahren zum Betrieb einer solchen Kapselfüllmaschine.

Pharmazeutische Produkte, Produkte aus dem Bereich der Nahrungsergänzungsmittel oder dergleichen werden häufig als Einheitsdosis in einer Steckkapsel beispielsweise aus Hartgelatine verabreicht. Solche Steckkapseln werden im Leerzustand angeliefert und auf Kapselfüllmaschinen mit dem gewünschten Inhalt befüllt. Hierzu kommen Kapselfüllmaschinen zum Einsatz, die verbreitet als Rundläufer mit einem Drehtisch ausgebildet sind. Auf dem Drehtisch sind sogenannte Kapselsegmente angeordnet, welche jeweils mehrere in einer Reihe angeordnete Kapselaufnahmen für jeweils eine Kapsel aufweisen. Der Drehtisch ist in einer Drehebene derart schrittweise verfahrbar, dass die Kapselsegmente sequentiell verschiedene Bearbeitungsstationen durchlaufen. Typische Schritte, die an den einzelnen Bearbeitungsstationen ausgeführt werden, sind das Öffnen der leeren, anfänglich noch vorverschlossenen Kapseln, das Befüllen und Verschließen derselben, die Prüfung, der Ausstoß von Schlechtkapseln und schließlich der Ausstoß der als ordnungsgemäß eingestuften Kapseln.

Bei kritischen Füllprodukten insbesondere im Bereich der Pharmazie kommt der exakten Dosierung der Wirkstoffmenge in den Kapseln eine zentrale Rolle zu. In solchen Fällen wird eine 100%ige Verwiegung der Kapseln vorgenommen. Zunächst erfolgt eine Verwiegung der Leerkapseln, um deren Tara-Gewicht zu bestimmen. Daran schließt sich der Befüll-Prozess an, auf den wiederum eine 100%ige Verwiegung der befüllten Kapseln (Kontrolle des Brutto-Gewichts) folgt. Aus der Differenz zwischen Brutto- und Tara-Gewicht wird auf das Gewicht der Füllmenge geschlossen.

Bei der Anordnung nach der DE 10 2009 028 372 A1 werden Kapselunterteile mittels einer Transportvorrichtung einem Wägetisch zugeführt. Die Transportvorrichtung umfasst eine schwenkbare Aufnahme für einen herausnehmbaren Formateinsatz, welcher seinerseits ein Kapselunterteil aufnimmt. Der jeweilige Formateinsatz kann relativ zu seiner Aufnahme vertikal verschoben und dadurch auf dem Wägetisch freigestellt werden.

Es hat sich gezeigt, dass die vorstehend beschriebene Brutto-Kontrolle insbesondere die Befüllung von geringen Dosiermengen nicht ausreichend genau abdeckt, da das Wiegen von kleinen Massen insbesondere in Relation zur Kapselmasse mit einiger Ungenauigkeit einhergeht. Verbreitet werden deshalb zur Ergänzung indirekte Kontrollsysteme eingesetzt. Hierbei kann es sich um sogenannte AMV-Systeme (Advanced Mass Verification Systeme) handeln, bei denen während des Füllvorganges die in die jeweilige Kapsel eintretende Füllmenge kapazitiv ermittelt wird. Zur Justierung solcher Messsysteme müssen präzise Stichproben-Vergleichsmessungen mit dem tatsächlich ermittelten Wert (Bestimmung des Dosiergewichts mittels Waage) herangezogen werden. Als In-Prozess-Kontrolle müssen solche Vergleichsmessungen während der Produktion stichprobenhaft wiederholt werden. Solche Stichproben führen zu einer kostenrelevanten Unterbrechung des regulären Produktionsprozesses. Erschwerend kommt hinzu, dass die zum Einsatz kommende Wiegezelle exakt an das Format der zu verwiegenden Kapsel angepasst sein muss, sodass bei einem Produktwechsel mit einer Formatumstellung nicht nur die Kapselsegmente, sondern auch die Wiegezelle angepasst werden muss.

Noch aufwändiger gestaltet sich die Füllmengen-Kontrolle bei einer Mehrkomponenten Befüllung der einzelnen Kapseln. Hierbei werden einzelne Produktkomponenten separat in verschiedenen Füllstationen sequentiell in die jeweiligen Kapseln eingefüllt. Eine Brutto-Kontrolle der fertig befüllten Kapseln liefert keine verlässlichen Aussagen über die eingefüllten Einzelmengen. Es muss also eine Brutto-Kontrolle der Einzelmengen und darauf aufbauend eine Justierung der jeweiligen AMV-Systeme in den verschiedenen Füllstationen mit entsprechenden Ausfallzeiten des regulären Produktionsprozesses vorgenommen werden.

Da auch der Einsatz von AMV-Systemen oder dergleichen nicht ohne die Kontrolle mittels Waage auskommt, tritt hier erneut das Problem der Bestimmung kleiner Massen auf. Das begrenzte Volumen der zu verwiegenden Kapseln und die damit einhergehende Gesamtmasse einer Einzelkapsel führt im Stand der Technik dazu, dass zur Justierung des Messsystems mehrere Kapseln befüllt und verwogen werden, um hieraus einen Mittelwert als Referenz zu bilden. Die für eine solche Mehrfachverwiegung erforderliche Zeit senkt die effektive Produktionszeit der Maschine.

Der Erfindung liegt die Aufgabe zu Grunde, eine gattungsgemäße Kapselfüllmaschine derart weiterzubilden, dass eine exakte Füllmengenkontrolle mit vermindertem Einfluss auf den regulären Füllbetrieb möglich ist.

Diese Aufgabe wird durch eine Kapselfüllmaschine mit den Merkmalen des Anspruchs 1 gelöst.

Der Erfindung liegt des Weiteren die Aufgabe zu Grunde, ein Verfahren zum Betrieb einer solchen Kapselfüllmaschine anzugeben, bei dem die Füllmengenkontrolle zu verminderten Unterbrechungen des regulären Füllbetriebes führt.

Diese Aufgabe wird durch ein Verfahren mit den Merkmalen des Anspruchs 7 gelöst.

Nach der Erfindung ist eine Kapselfüllmaschine vorgesehen, welche einen Drehtisch mit Kapselsegmenten zur Aufnahme von zu befüllenden Kapseln, mindestens eine Einsetzstation zum Einsetzen von leeren Kapseln in die Kapselsegmente und mindestens eine Füllstation zum Befüllen der Kapseln umfasst. Die Kapselsegmente weisen jeweils ein Segmentunterteil mit Kapselaufnahmen für Kapselunterteile der Kapseln auf. Die Kapselfüllmaschine umfasst mindestens einen für den wiederkehrenden Einsatz in der Kapselfüllmaschine vorgesehenen Prüfcontainer zum Aufsetzen auf eine Kapselaufnahme des Segmentunterteils, sowie eine Container-Wiegestation mit einer Wiegezelle zum Wiegen des Prüfcontainers.

Im erfindungsgemäßen Verfahren werden in einem regulären Betriebsmodus in einer Einsetzstation Kapselunterteile in jeweils eine Kapselaufnahme eines Segmentunterteils eingesetzt, wonach die Kapselunterteile im Segmentunterteil mittels des Drehtischs zu der mindestens einen Füllstation verfahren und dort mit einem Produkt befüllt werden. In einem Prüfmodus wird ein Prüfcontainer auf eine Kapselaufnahme eines Segmentunterteils aufgesetzt, wonach der Prüfcontainer auf dem Segmentunterteil mittels des Drehtischs zu der mindestens einen Füllstation verfahren und dort mit dem Produkt befüllt wird. Der befüllte Prüfcontainer wird zur Container-Wiegestation verfahren und dort mittels der Wiegezelle gewogen.

Die erfindungsmäße alternative Befüllung von entweder Kapselunterteilen oder von Prüfcontainern erlaubt eine weitgehende Entflechtung des Prüfmodus vom regulären Betriebsmodus derart, dass ein nach Bedarf vorgenommener Prüfvorgang nur zu einer minimalen Unterbrechung der regulären Produktion führt.

Insbesondere wird hierzu der befüllte Prüfcontainer aus der Kapselaufnahme des Segmentunterteils entnommen, wonach bereits dann der reguläre Betriebsmodus wieder aufgenommen wird. Parallel dazu wird dann der befüllte Prüfcontainer mittels der Wiegezelle der Container-Wiegestation während des fortlaufenden Füllvorganges im regulären Betriebsmodus gewogen. Dies kann mit der erforderlichen Genauigkeit erfolgen, ohne dass der hierzu erforderliche Zeitaufwand zu Wartezeiten im regulären Betriebsmodus führt.

In vorteilhafter Weiterbildung der Erfindung weist der Prüfcontainer ein inneres Containervolumen auf, welches ein Vielfaches eines inneren Kapselvolumens eines zu befüllenden Kapselunterteils beträgt. Im entsprechenden Verfahren wird der Prüfcontainer an der mindestens einen Füllstation mit einem Vielfachen der für eine Kapselfüllung vorgesehenen Produktmenge befüllt. Der solchermaßen befüllte Prüfcontainer wird mittels der Wiegezelle der Container-Wiegestation gewogen. Aus der gewogenen Masse und dem gewählten Vielfachen der vorgesehenen Produktmenge wird eine mittlere Masse einer einzelnen tatsächlich dosierten Produktmenge bestimmt. Auf diese Weise können selbst geringe Einzelmassen mit großer Genauigkeit bestimmt werden, da eine Wägung der deutlich höheren Gesamtmasse technisch einfacher und zuverlässiger möglich ist und außerdem zu deutlicheren Differenzen zur störenden Masse der nach dem Stand der Technik mit verwogenen Kapseln führt.

Es kann zweckmäßig sein, nur einen einzelnen Prüfcontainer oder eine begrenzte Anzahl davon vorzusehen. Bevorzugt ist die Kapselfüllmaschine dazu ausgelegt, in mehrere Kapselaufnahmen und insbesondere in alle Kapselaufnahmen eines einzelnen Segmentunterteils je einen Prüfcontainer einzusetzen. Dies erlaubt die Befüllung an sämtlichen Füllplätzen einer Füllstation in einem einzigen Durchgang, ohne dass diese Füllstation mehrfach angefahren werden müsste. Der Zeitaufwand ist entsprechend gering.

Zweckmäßig ist die Container-Wiegestation zum sequenziellen Wiegen einzelner Prüfcontainer ausgelegt. Auf diese Weise lassen sich sehr genaue Einzelergebnisse erzielen. Durch die oben schon erwähnte Entflechtung von Prüf- und Betriebsmodus ist der erforderliche Zeitaufwand ohne Nachteil.

Für die mechanische Ausgestaltung der Container-Wiegestation kommen verschiedene Möglichkeiten in Betracht. Vorteilhaft weist die Container-Wiegestation einen um eine vertikale Schwenkachse schwenkbar gelagerten Transportkopf auf, wobei im Transportkopf mindestens ein Teleskoparm mit einem Greifer für einen Prüfcontainer radial zur Schwenkachse geführt ist, und wobei ein Schwenkweg des Transportkopfes und ein Linearweg des Teleskoparmes derart aufeinander abgestimmt sind, dass der Greifer in den Bereich einer Kapselaufnahme und in den Bereich der Wiegezelle gebracht werden kann. Bei einfachem mechanischem Aufbau ist eine gute Positioniergenauigkeit mit hoher Betriebssicherheit erzielt.

In einer bevorzugten Ausgestaltung umfasst die Container-Wiegestation eine Reinigungsvorrichtung für den Prüfcontainer. Hier können die gewogenen Prüfmengen des Produkts zuverlässig entfernt werden, sodass für nachfolgende Prüfvorgänge saubere Prüfcontainer ohne Restmengen des Produkts zur Verfügung stehen.

Es kann ausreichen, die erfindungsgemäße Vorrichtung und das erfindungsgemäße Verfahren für eine Stichproben-Kontrolle der im regulären Betriebsmodus dosierten Produktmengen heranzuziehen, ohne dass beispielsweise eine 100%-Kontrolle vorgenommen wird. Vorteilhaft ist die mindestens eine Füllstation mit einem indirekten Massen-Messsystem zur Bestimmung der ausgegebenen Produktmasse versehen, wobei dann durch Wiegen des befüllten Prüfcontainers mittels der Wiegezelle der Container-Wiegestation eine Kalibrierung bzw. Nachjustierung des indirekten Massen-Messsystems vorgenommen wird. Auf diese Weise lässt sich eine 100%ige In-Prozess-Kontrolle über einen langen Produktionszeitraum bei nur geringen Unterbrechungszeiten des regulären Betriebsmodus realisieren.

Ein Ausführungsbeispiel der Erfindung ist nachfolgend anhand der Zeichnung näher beschrieben. Es zeigen:
- Fig. 1: in einer schematischen Draufsicht eine Kapselfüllmaschine in erfindungsgemäßer Ausgestaltung mit Drehtisch, mit Kapselsegmenten auf dem Drehtisch, sowie mit einer Container-Wiegestation zum Wiegen von Prüfcontainern,
- Fig. 2: in einer Perspektivansicht die Container-Wiegestation der Kapselfüllmaschine nach Fig. 1 mit in Ruheposition befindlichen Prüfcontainern während des regulären Betriebsmodus,
- Fig. 3: die Anordnung nach Fig. 2 zu Beginn eines Prüfmodus beim Absetzen der Prüfcontainer auf ein Segmentunterteil eines Kapselsegmentes,
- Fig. 4: in einer vergrößerten Detaildarstellung das Segmentunterteil nach Fig. 3 mit darüber positionierten Prüfcontainern,
- Fig. 5: die Anordnung nach Fig. 4 mit auf das Segmentunterteil abgesetzten Prüfcontainern,
- Fig. 6: die Anordnung nach den Fig. 2 und 3 mit gefüllten, zur Container-Wiegestation zurück verfahrenen Prüfcontainern,
- Fig. 7: die Anordnung nach Fig. 6 mit vom Kapselsegment abgehobenen und zu einer Wiegezelle verbrachten Prüfcontainern,
- Fig. 8: die Anordnung nach Fig. 7 mit einem auf der Wiegezelle abgesetzten Wiegecontainer, und
- Fig. 9: in einer rückwärtigen Perspektivansicht die Anordnung nach Fig. 8 mit zu einer Reinigungsvorrichtung verbrachten Prüfcontainern.

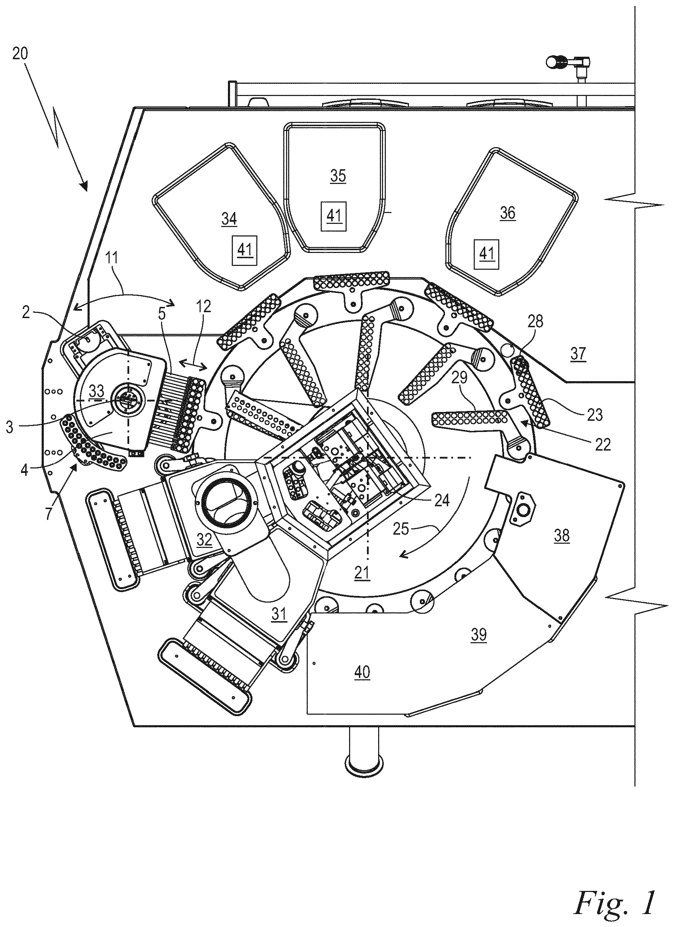

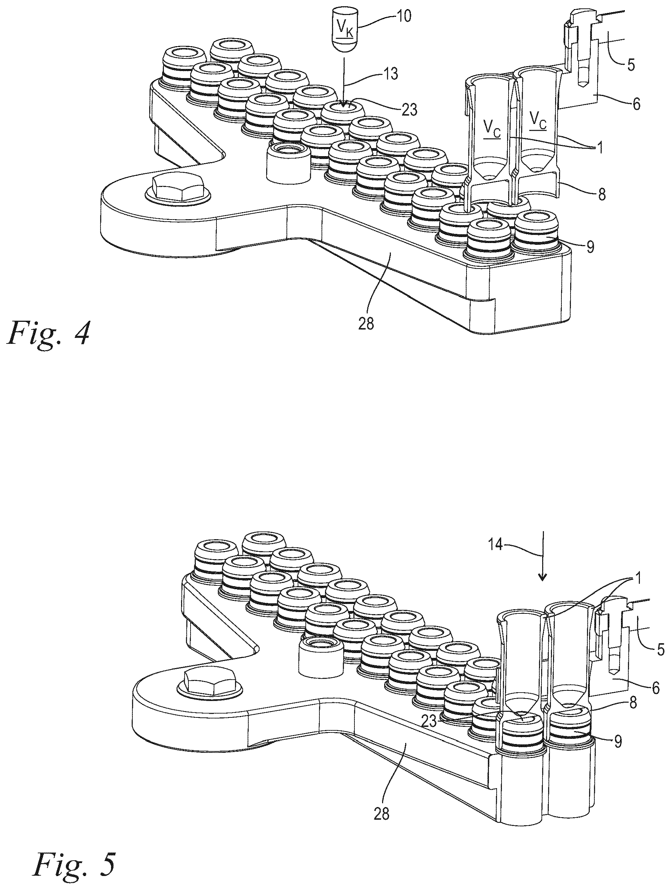

Fig. 1 zeigt in einer Draufsicht den zentralen Teil einer erfindungsgemäß ausgeführten Kapselfüllmaschine 20 zum Befüllen von Kapseln mit einem Füllgut. Das Füllgut kann in Form eines Pulvers, eines Granulats, Tabletten oder dgl. bereitgestellt sein. Dabei kann es sich um ein pharmazeutisches Präparat, ein Nahrungsergänzungsmittel oder dergleichen handeln. Die Kapseln sind in üblicher Bauform ausgeführt und bestehen aus einem in Fig. 4 dargestellten Kapselunterteil 10 und einem nicht dargestellten, darauf aufgesteckten Kapseloberteil, die beide beispielsweise aus Hartgelatine hergestellt sind.

Die Kapselfüllmaschine 20 nach Fig. 1 umfasst einen Drehtisch 21, der drehend um eine vertikale Drehachse 24 entsprechend einem Pfeil 25 in getakteten Schritten antreibbar ist. Auf einem Umfangsbereich des Drehtisches 21 ist in gleichmäßigen Winkelabständen eine Anzahl von Kapselsegmenten 22 angeordnet. Im gezeigten Ausführungsbeispiel sind insgesamt zehn Kapselsegmente 22 vorgesehen. Es kann aber auch eine andere Anzahl zweckmäßig sein.

Aus der Fig. 1 wird deutlich, dass jedes Kapselsegment 22 aus je einem fest am Umfangsbereich des Drehtisches 21 befestigten Segmentunterteil 28 sowie einem relativ dazu veschwenkbaren Segmentoberteil 29 besteht. Im gezeigten bevorzugten Ausführungsbeispiel enthalten die Segmentunterteile 28 eine Anzahl von Kapselaufnahmen 23 zur Aufnahme je eines Kapselunterteils 10 (Fig. 4), wobei die Kapselaufnahmen 23 jeweils in mindestens einer linearen, geradlinigen Reihe angeordnet sind. Vorliegend hat jedes Segmentunterteil 28 zwei Reihen von jeweils zwölf Kapselaufnahmen 23, also insgesamt vierundzwanzig Kapselaufnahmen 23, wobei aber auch eine abweichende Anzahl zweckmäßig sein kann. Die Segmentoberteile 29 sind korrespondierend dazu mit einer entsprechenden Anzahl von Aufnahmen für die Kapseloberteile versehen.

Um den Drehtisch 21 herum sind mehrere feststehende, also nicht mit dem Drehtisch 21 mitdrehende Bearbeitungsstationen 31 bis 40 positioniert, die teilweise nur schematisch und nicht im Detail dargestellt sind. Die Anzahl und Position der Bearbeitungsstationen 31 bis 40 korrespondiert mit der Anzahl der Kapselsegmente 22. Vorliegend sind also insgesamt zehn Bearbeitungsstationen 31 bis 40 vorgesehen, so dass in jeder in Winkelschritten getakteten Drehposition des Drehtisches 21 jedes Kapselsegment 22 im Zugriffsbereich je einer der Bearbeitungsstationen 31 bis 40 zu liegen kommt.

In einem regulären Betriebsmodus werden gemäß dem gezeigten bevorzugten Ausführungsbeispiel beginnend mit den ersten beiden Bearbeitungsstationen, nämlich an Einsetzstationen 30, 31 zunächst provisorisch zusammengesteckte, jeweils aus einem Kapselunterteil 10 (Fig. 4) und einem Kapseloberteil bestehende Leerkapseln in die Reihe von Kapselaufnahmen 23 eingesetzt, wobei dann auch eine Trennung der aufgesteckten Kapseloberteile von den Kapselunterteilen 10 erfolgt. In der ersten Einsetzstation 31 erfolgt der Einsatz der Leerkapseln in die radial innere Aufnahme-Reihe des Kapselsegments 22, worauf in der zweiten Bearbeitungsstation 32 der Einsatz der Leerkapseln in die radial äußere Reihe folgt.

Die nächste Bearbeitungsstation ist eine Station mit Doppelfunktion. Zum einen werden dort nicht geöffnete Leerkapseln ausgeschieden. Zum anderen befindet sich dort eine Container-Wiegestation 33, deren Funktion weiter unten noch ausführlich beschrieben wird. Beim Übergang von der zweiten Einsetz- und Trennstation 32 zur Container-Wiegestation 33 wird das Segmentoberteil 29 mit den darin gehaltenen Kapseloberteilen gegenüber dem Segmentunterteil 28 verschwenkt, sodass das Segmentunterteil 28 mit den darin gehaltenen Kapselunterteilen 10 frei von oben zugänglich ist. In diesem Zustand befinden sich eventuell vorhandene, nicht geöffnete Leerkapseln im aufgeschwenkten Segmentoberteil 29, die an dieser Stelle ausgestoßen und entfernt werden.

Auf die Container-Wiegestation 33 folgen hier insgesamt drei Bearbeitungsstationen in Form von Füllstationen 34, 35, 36, in denen die in den Segmentunterteilen 28 gehaltenen Kapselunterteile 10 sequentiell mit verschiedenen Anteilen des vorgesehenen Füllguts im Sinne einer Mehrkomponentenfüllung befüllt werden. Es kann auch ausreichen, nur eine oder zwei Füllstationen vorzusehen. Jede Füllstation verfügt über ein eigenes indirektes Massen-Messsystem, welches aus dem Stand der Technik bekannt und hier nur schematisch angedeutet ist. Vorliegend handelt es sich bei dem indirekten Massen-Messsystem um ein AMV-System (Advanced Mass Verification System), bei dem die dosierte Produktmenge durch eine kapazitive Messstrecke in den Zielbehälter (Kapselunterteil 10 oder Prüfcontainer 1) fällt und dabei ein kapazitives Messsignal erzeugt. Bei korrekter Justierung und Kalibrierung liefert das kapazitive Messsignal eine sehr genaue Masse-Bestimmung selbst von sehr kleinen Füllmengen.

Nach dem Durchlaufen der letzten Füllstation 36 erfolgt gemäß dem regulären Betriebsmodus in einer Einschwenkstation 37 ein Einschwenken des Segmentoberteils 29 zurück in die fluchtende Lage relativ zum Segmentunterteil 28. In der darauffolgenden Schließstation 38 werden die Kapseln verschlossen, indem die zuvor abgezogenen bzw. getrennten Kapseloberteile zurück auf die befüllten Kapselunterteile 10 geschoben und verrastet werden. An die Schließstation 38 schließt sich eine Kontrollstation 39 an. In der Kontrollstation 39 werden geprüfte und für schlecht befundene Kapseln ausgeworfen. In einer nachfolgenden letzten Station, nämlich in der Ausstoßstation 40, werden die verbleibenden und für gut befundenen Kapseln ausgestoßen und weiteren Prozessschritten wie Reinigung und Verpackung zugeführt.

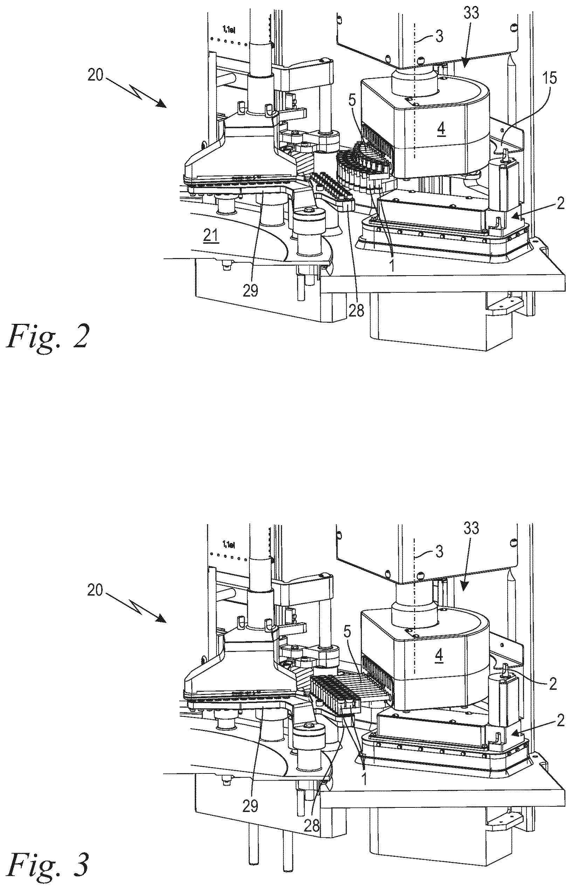

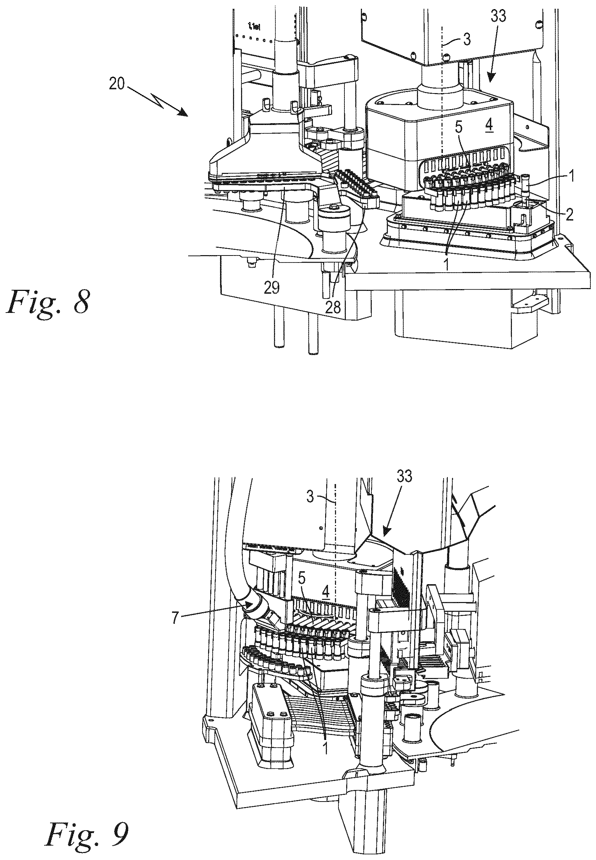

Der Draufsicht nach Fig. 1 sind noch erste Einzelheiten der Container-Wiegestation 33 entnehmbar. Demnach umfasst die Container-Wiegestation 33 eine Wiegezelle 2 zum Wiegen von weiter unten im Zusammenhang mit den Fig. 2 bis 9 näher beschriebenen Prüfcontainern 1 sowie einen um eine vertikale Schwenkachse 3 entsprechend einem Doppelpfeil 11 schwenkbar gelagerten und antreibbaren Transportkopf 4. Im oder am Transportkopf 4 sind mindestens ein, hier mehrere Teleskoparme 5 etwa radial zur Schwenkachse 3 entsprechend einem Doppelpfeil 12 geführt und antreibbar. An ihren freien Enden sind die Teleskoparme 5 jeweils mit einem Greifer 6 (Fig. 4, 5) für mindestens einen, hier für jeweils zwei Prüfcontainer 1 versehen. Ein Schwenkweg des Transportkopfes 4 und ein Linearweg der Teleskoparme 5 sind derart aufeinander abgestimmt, dass alle Greifer 6 sowohl in den Bereich einer zugeordneten Kapselaufnahme 23 des an der Container-Wiegestation 33 befindlichen Segmentunterteils 28 als auch in den Bereich der Wiegezelle 2 gebracht werden können. Darüber hinaus ist noch erkennbar, dass die Container-Wiegestation 33 über eine Reinigungsvorrichtung 7 verfügt, deren Funktion weiter unten im Zusammenhang mit Fig. 9 näher beschrieben ist.

Fig. 2 zeigt in einer Perspektivansicht die Kapselfüllmaschine 20 nach Fig. 1 im Bereich der Container-Wiegestation 33 während des vorstehend im Zusammenhang mit Fig. 1 beschriebenen regulären Betriebsmodus. Auf ihrer dem Drehtisch 21 abgewandten Rückseite weist die Container-Wiegestation 33 eine Abdeckung 15 auf, unterhalb derer die Prüfcontainer 1 während des regulären Betriebsmodus geschützt aufbewahrt bzw. geparkt werden (nicht dargestellt). Ein Segmentunterteil 28 ist im vorliegenden Verfahrensschritt im Einzugsbereich der Container-Wiegestation 33 angehalten, während das zugehörige, in der Hochrichtung darüber befindliche Segmentoberteil 29 davon fortgeschwenkt ist. In Vorbereitung des nun folgenden Prüfmodus wurden die Prüfcontainer 1 mittels des Transportkopfes 4 aus der vorstehend beschriebenen Parkposition geholt. Der Transportkopf 4 befindet sich nun in einer Schwenkposition, bei der die Teleskoparme 5 mit den an ihren Enden gehaltenen Prüfcontainern 1 in Richtung des angrenzenden Segmentunterteils 28 weisen. Die Teleskoparme 5 sind soweit zurückgezogen, dass sich die daran gehaltenen Prüfcontainer 1 auf Kreisbahnen um die Schwenkachse 2 befinden, welche in den Einzugsbereich der Wiegezelle 2 und der Reinigungsvorrichtung 7 führen, ohne jedoch das angrenzende Segmentunterteil 28 zu überdecken oder in anderer Weise während des regulären Betriebsmodus zu beeinträchtigen. Mit anderen Worten befinden sich die Prüfcontainer 1 an dieser Stelle während des regulären Betriebsmodus in einer Bereitschaftsposition, bis sie in einem weiter unten beschriebenen Prüfmodus zum Einsatz kommen. Die geparkten Prüfcontainer 1 wurden zuvor im Leerzustand mittels der Wiegestation verwogen, um für jeden Prüfcontainer je ein Tara-Gewicht zu ermitteln.

Fig. 3 zeigt die Anordnung nach Fig. 2 zu Beginn des nun stattfindenden Prüfmodus, bei dem der vorstehend beschriebene reguläre Betriebsmodus zeitweilig unterbrochen ist. In diesem Prüfmodus werden die Teleskoparme 5 gegenüber dem Transportkopf 4 soweit ausgefahren, dass die an ihren Enden gehaltenen Prüfcontainer 1 oberhalb jeweils einer Kapselaufnahme 23 des Segmentunterteils 28 positioniert und auf diese herabgesenkt sind.

Fig. 4 zeigt in einer vergrößerten Detaildarstellung das Segmentunterteil 28 nach Fig. 3 mit den darüber positionierten Prüfcontainern 1. Für eine bessere Übersicht ist hier in einem Längsschnitt nur das freie Ende eines einzelnen Teleskoparms 5 mit einem Greifer 6 und mit einem Paar von im Greifer 6 gehaltenen Prüfcontainern 1 gezeigt. Aus der Zusammenschau mit Fig. 3 ergibt sich, dass im gezeigten bevorzugten Ausführungsbeispiel tatsächlich für jede einzelne Kapselaufnahme 23 eines einzelnen Segmentunterteils 28 je ein Prüfcontainer 1 vorgesehen ist. Die Anzahl von Teleskoparmen 5 und der Greifer 6 entspricht der Anzahl von Kapselaufnahmen 23 innerhalb einer linearen Reihe, wonach im gezeigten Ausführungsbeispiel also zwölf Teleskoparme 5 und zwölf Greifer 6 vorgesehen sind. Jeder Greifer ist dazu ausgelegt, gleichzeitig eine Anzahl von Prüfcontainern 1 zu greifen, die der Anzahl der linearen Reihen von Kapselaufnahmen 23 des Segmentunterteils 28 entspricht. Vorliegend ist also jeder Greifer 6 für das Greifen von zwei Prüfcontainern 1 ausgelegt, sodass insgesamt vierundzwanzig Prüfcontainer 1 vorhanden sind und entsprechend der vierundzwanzig Kapselaufnahmen 23 eines einzelnen Segmentunterteils 28 gehandhabt werden können. Im Rahmen der Erfindung kann es aber auch zweckmäßig sein, nicht für jede Kapselaufnahme je einen Prüfcontainer 1 vorzusehen. So ist es zum Beispiel denkbar, eine geringere Anzahl von Prüfcontainern 1 oder sogar nur einen einzelnen Prüfcontainer 1 bereitzustellen und damit dann sequentiell alle Kapselaufnahmen 23 oder nur eine Auswahl davon zu berücksichtigen.

Die Prüfcontainer 1 weisen entsprechend der Schnittdarstellung nach Fig. 4 einen nur nach oben offenen und im Übrigen geschlossenen Innenraum mit einem Containervolumen Vc auf. Unterhalb davon sind die Prüfcontainer 1 mit einem Positionierkragen 8 versehen, mit denen sie auf Vorsprüngen 9 der Kapselaufnahmen 23 abgesetzt und zentriert positioniert werden können.

Zum Vergleich mit den Prüfcontainern 1 ist schematisch ein einzelnes Kapselunterteil 10 dargestellt, von denen im regulären Betrieb je eines von oben in je eine Kapselaufnahme 23 entsprechend einem Pfeil 13 eingesetzt wird. Ebenso wie die Prüfcontainer 1 weisen die Kapselunterteile 10 jeweils einen nur nach oben offenen Innenraum auf, wobei ein solcher Innenraum hier ein Kapselvolumen V_{K} aufweist. Das innere Containervolumen Vc des Prüfcontainers 1 beträgt ein Vielfaches des inneren Kapselvolumens V_{K} eines einzelnen Kapselunterteils 10, sodass ein einzelner Prüfcontainer mehrere Einzelmengen des für die Füllung eines einzelnen Kapselunterteils 10 vorgesehenen Produkts fassen kann. Das genannte Vielfache des inneren Kapselvolumens V_{K} beträgt mindestens das Doppelte, bevorzugt das Fünf- bis Zwanzigfache, und insbesondere das Acht- bis Fünfzehnfache des inneren Kapselvolumens V_{K}. Dementsprechend werden im Betrieb vorteilhaft mindestens zwei, bevorzugt fünf bis zwanzig, und insbesondere acht bis fünfzehn Einzelmengen des für die Füllung eines einzelnen Kapselunterteils 10 vorgesehenen Produkts in einen einzelnen Prüfcontainer 1 eingefüllt, woraufhin dann die solchermaßen befüllten Prüfcontainer 1 in nachfolgend beschriebener Weise gewogen werden.

Fig. 5 zeigt die Anordnung nach Fig. 4 mit im Prüfmodus auf das Segmentunterteil 28 abgesetzten Prüfcontainern 1, was dem Zustand nach Fig. 3 entspricht. Hierzu wurde der Transportkopf 4 (Fig. 3) mit den Teleskoparmen 5 entsprechend einem Pfeil 14 nach unten abgesenkt, in dessen Folge die Prüfcontainer 1 auf das Segmentunterteil 28 abgesenkt wurden. Es ist erkennbar, dass die Prüfcontainer 1 mit ihrem jeweiligen Positionierkragen 8 den Vorsprung 9 der zugeordneten Kapselaufnahme 23 umschließen, sodass die Prüfcontainer 1 im Prüfmodus bezogen auf die horizontale Lage in gleicher Position wie die Kapselunterteile 10 im regulären Betriebsmodus ausgerichtet bzw. zentriert sind.

Hiervon ausgehend wird das solchermaßen mit Prüfcontainern 1 bestückte Segmentunterteil 28 mittels des Drehtischs 21 zu der mindestens einen Füllstation, hier zur ersten Füllstation 34 verfahren, wo dann entsprechende Produktmengen nicht in Kapselunterteile 10, sondern stattdessen in die Prüfcontainer 1 eingefüllt werden. Es kann ausreichen, nur die für die Befüllung eines Kapselunterteils 10 vorgesehene Einzelmenge des jeweiligen Produkts einzufüllen. In der vorliegenden bevorzugten Ausführungsform werden jedoch mehrere der für die Befüllung eines Kapselunterteils 10 vorgesehene Einzelmengen, also ein Vielfaches derselben in je einen Prüfcontainer 1 eingefüllt. Die Anzahl der Einzelmengen und die zugehörigen Messsignale des indirekten Massen-Messsystems 41 werden protokolliert bzw. gespeichert, und bleiben für die spätere Auswertung abrufbereit.

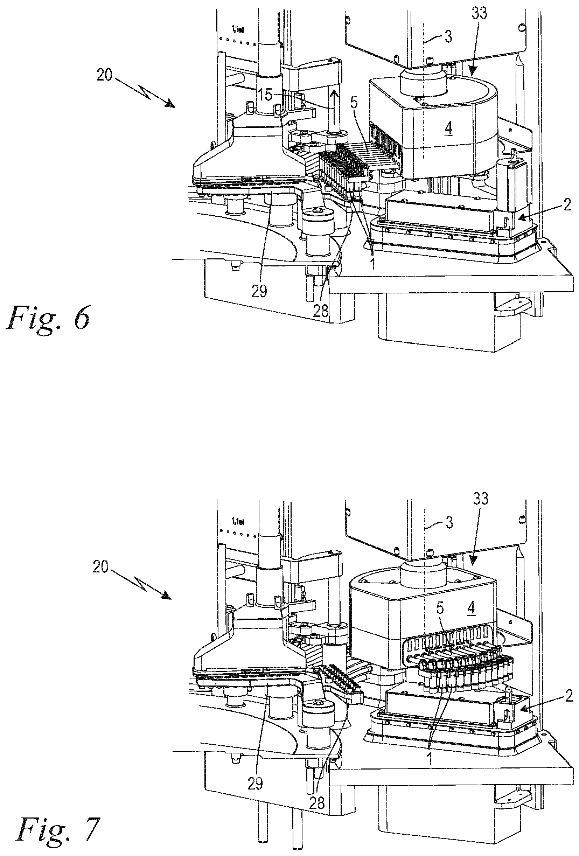

Im weiteren Verlauf des Prüfmodus wird nun der Drehtisch 21 entgegen dem Pfeil 25 nach Fig. 1 soweit zurückgedreht, dass das Segmentunterteil 28 mit den befüllten Prüfcontainern 1 wieder im Einzugsbereich der Container-Wiegestation 33 positioniert ist. Dies ist in Fig. 6 dargestellt, wobei die Prüfcontainer 1 von den Greifern 6 der Teleskoparme 5 (Fig. 4, 5) erneut gegriffen und vom Segmentunterteil 28 entsprechend einem Pfeil 15 abgehoben wurden.

Der nächste Verfahrensschritt ergibt sich aus der Darstellung nach Fig. 7, wonach ausgehend von Fig. 6 die Prüfcontainer 1 infolge einer Schwenkbewegung des Transportkopfes 4 in den Bereich der Wiegezelle 1 verbracht wurden. Die Teleskoparme 5 sind wieder soweit zurückgezogen, dass sich die an ihren freien Enden gehaltenen Prüfcontainer 1 auf den weiter oben im Zusammenhang mit Fig. 2 schon beschriebenen Kreisbahnen um die Schwenkachse 3 herum befinden.

Sobald die Prüfcontainer 1 mittels des Transportkopfes 4 aus dem Einzugsbereich des angrenzenden Segmentunterteils 28 entsprechend der Darstellung nach Fig. 7 fortgeschwenkt wurden, kann der oben im Zusammenhang mit Fig. 1 beschriebene reguläre Betriebsmodus mit der Befüllung leerer Kapseln wieder aufgenommen werden. Der nachfolgend beschriebene Wiege- und Kalibriervorgang kann parallel zum regulären Betriebsmodus durchgeführt werden.

Die aus dem Einzugsbereich des angrenzenden Segmentunterteils 28 herausgebrachten und befüllten Prüfcontainer 1 werden nun mittels der Wiegezelle 2 verwogen. Hierzu ist im gezeigten Ausführungsbeispiel die Container-Wiegestation 33 zum sequenziellen Wiegen einzelner Prüfcontainer 1 ausgelegt. Vorliegend wird dies dadurch erreicht, dass durch eine koordinierte Schwenkbewegung des Transportkopfes und eine koordinierte Linearbewegung der Teleskoparme 5 die Prüfcontainer 1 nacheinander einzeln auf der Wiegezelle 2 abgestellt und einzeln verwogen werden, wie es in Fig. 8 erkennbar ist. Auf diese Weise wird ein Brutto-Gewicht jedes einzelnen befüllten Prüfcontainers 1 ermittelt. Aus der Differenzbildung mit dem zuvor ermittelten und weiter oben schon erwähnten Tara-Gewicht folgt die Gewichtsbestimmung der jeweiligen Füllmenge innerhalb jedes Prüfcontainers 1. Das solchermaßen bestimmte Gesamtgewicht der Füllung wird nun durch die protokollierte Anzahl der eingefüllten Einzelmengen dividiert, woraus eine mittlere Masse der einzelnen in der ersten Füllstation 34 tatsächlich dosierten Produktmengen resultiert. Hieraus und aus den ebenfalls protokollierten korrespondierenden Messsignalen wird nun eine Kalibrierung bzw. Nachjustierung des indirekten Massen-Messsystems 41 der ersten Füllstation 34 vorgenommen, was insbesondere im Rahmen einer In-Prozess-Kontrolle während des laufenden regulären Betriebsmodus durchgeführt werden kann. Anschließend kann in analoger Weise nacheinander auch eine Kalibrierung bzw. Nachjustierung des indirekten Massen-Messsystems 41 auch der weiteren Füllstationen 35, 36 ausgeführt werden. Die Prüfcontainer 1 können hierfür vorab geleert und dann neu befüllt werden. Es kann aber auch zweckmäßig sein, die Füllmenge aus der vorangegangenen Prüfwägung im Prüfcontainer 1 zu belassen, wobei dann das zuvor ermittelte Gesamtgewicht als Tara-Gewicht der aktuellen Prüfwägung herangezogen wird.

Wie schon erwähnt, kann es gemäß der Erfindung ausreichen, an der jeweiligen Füllstation 34, 35, 36 nur eine einzige für die Befüllung eines Kapselunterteils 10 vorgesehene Einzelmenge in den Prüfcontainer 1 einzufüllen und dessen Masse in vorstehend beschriebener Weise mittels der Wiegezelle 2 zu bestimmen. Durch die Einfüllung eines Vielfachen davon und die nachfolgende Mittelwertbildung wird die Gesamtmasse jedoch selbst bei sehr geringen Einzelfüllmengen soweit erhöht, dass eine zuverlässigere Wägung mit genauerer Mittelwertbestimmung möglich ist.

In einer weiteren Variante kann es zweckmäßig sein, zunächst Füllungen an allen Füllstationen 34, 35, 36 vorzunehmen und dann erst eine Wägung vorzunehmen. Außerdem kann die Erfindung auch ohne den Kontext eines indirekten Massen-Messsystems 41 eingesetzt werden, indem die oben beschriebene Wägung als einfache Stichproben-kontrolle für tatsächlich dosierte Füllmengen genutzt wird.

Fig. 9 zeigt in einer rückwärtigen Perspektivansicht die Anordnung nach Fig. 8, wobei die Container-Wiegestation 33 in diesem Bereich mit einer Reinigungsvorrichtung 7 versehen ist. Nach dem Wiegen gemäß Fig. 8 wurde der Transportkopf 4 soweit weitergedreht, dass die daran gehaltenen Prüfcontainer im Wirkbereich der Reinigungsvorrichtung 7. Dort werden die Füllmengen mit Druckluft ausgeblasen und gleichzeitig abgesaugt, sodass leere Prüfcontainer für ein erneutes Tarieren und für weitere Wägungen zur Verfügung stehen.

Im regulären Betriebsmodus werden Leerkapseln wie vorstehend beschrieben von außen der Kapselfüllmaschine 20 zugeführt und im befüllten Zustand der Kapselfüllmaschine 20 entnommen. In Unterscheidung hierzu sind die Prüfcontainer 1 Teil der Kapselfüllmaschine 20. Sie werden in einem Kreislauf wiederkehrend eingesetzt, wobei sie im gezeigten Ausführungsbeispiel in der Kapselfüllmaschine 20 als Teil derselben verbleiben.

## Patentansprüche

1. Kapselfüllmaschine (20), umfassend einen Drehtisch (21) mit Kapselsegmenten (22) zur Aufnahme von zu befüllenden Kapseln, mindestens eine Einsetzstation (31, 32) zum Einsetzen von leeren Kapseln in die Kapselsegmente (22) und mindestens eine Füllstation (34, 35, 36) zum Befüllen der Kapseln, wobei die Kapselsegmente (22) jeweils ein Segmentunterteil (28) mit Kapselaufnahmen (23) für Kapselunterteile (10) der Kapseln aufweisen,
**dadurch gekennzeichnet, dass** die Kapselfüllmaschine (20) mindestens einen für den wiederkehrenden Einsatz in der Kapselfüllmaschine (20) vorgesehenen Prüfcontainer (1) zum Aufsetzen auf eine Kapselaufnahme (23) des Segmentunterteils (28) umfasst, und dass die Kapselfüllmaschine (20) ferner eine Container-Wiegestation (33) mit einer Wiegezelle (2) zum Wiegen des Prüfcontainers (1) umfasst.

2. Kapselfüllmaschine nach Anspruch 1,
**dadurch gekennzeichnet, dass** der Prüfcontainer (1) ein inneres Containervolumen (V_{C}) aufweist, welches ein Vielfaches eines inneren Kapselvolumens (V_{K}) eines zu befüllenden Kapselunterteils (10) beträgt.

3. Kapselfüllmaschine nach Anspruch 1 oder 2,
**dadurch gekennzeichnet, dass** die Kapselfüllmaschine (20) dazu ausgelegt ist, in mehrere Kapselaufnahmen (23) und insbesondere in alle Kapselaufnahmen (23) eines einzelnen Segmentunterteils (28) je einen Prüfcontainer (1) einzusetzen.

4. Kapselfüllmaschine nach einem der Ansprüche 1 bis 3,
**dadurch gekennzeichnet, dass** die Container-Wiegestation (33) zum sequenziellen Wägen einzelner Prüfcontainer (1) ausgelegt ist.

5. Kapselfüllmaschine nach einem der Ansprüche 1 bis 4,
**dadurch gekennzeichnet, dass** die Container-Wiegestation (33) einen um eine vertikale Schwenkachse (3) schwenkbar gelagerten Transportkopf (4) aufweist, wobei im Transportkopf (4) mindestens ein Teleskoparm (5) mit einem Greifer (6) für einen Prüfcontainer (1) radial zur Schwenkachse (3) geführt ist, und wobei ein Schwenkweg des Transportkopfes (4) und ein Linearweg des Teleskoparmes (5) derart aufeinander abgestimmt sind, dass der Greifer (6) in den Bereich einer Kapselaufnahme (23) und in den Bereich der Wiegezelle (2) gebracht werden kann.

6. Kapselfüllmaschine nach einem der Ansprüche 1 bis 5,
**dadurch gekennzeichnet, dass** die Container-Wiegestation (33) eine Reinigungsvorrichtung (7) für den Prüfcontainer (1) umfasst.

7. Verfahren zum Betrieb einer Kapselfüllmaschine nach einem der Ansprüche 1 bis 6, umfassend folgende Verfahrensschritte:
- in einem regulären Betriebsmodus werden in einer Einsetzstation (31, 32) Kapselunterteile (10) in jeweils eine Kapselaufnahme (23) eines Segmentunterteils (28) eingesetzt, wonach die Kapselunterteile (10) im Segmentunterteil (28) mittels des Drehtischs (21) zu der mindestens einen Füllstation (34, 35, 36) verfahren und dort mit einem Produkt befüllt werden;
- in einem Prüfmodus wird ein Prüfcontainer (1) auf eine Kapselaufnahme (23) eines Segmentunterteils (28) aufgesetzt, wonach der Prüfcontainer (1) auf dem Segmentunterteil (28) mittels des Drehtischs (21) zu der mindestens einen Füllstation (34, 35, 36) verfahren und dort mit dem Produkt befüllt wird;
- der befüllte Prüfcontainer (1) wird zur Container-Wiegestation (33) verfahren und dort mittels der Wiegezelle gewogen.

8. Verfahren nach Anspruch 7,
**dadurch gekennzeichnet, dass** der Prüfcontainer (1) an der mindestens einen Füllstation (34, 35, 36) mit einem Vielfachen der für eine Kapselfüllung vorgesehenen Produktmenge befüllt wird, dass der solchermaßen befüllte Prüfcontainer (1) mittels der Wiegezelle (2) der Container-Wiegestation (33) gewogen wird, und dass daraus eine mittlere Masse einer einzelnen tatsächlich dosierten Produktmenge bestimmt wird.

9. Verfahren nach Anspruch 7 oder 8,
**dadurch gekennzeichnet, dass** die mindestens eine Füllstation (34, 35, 36) mit einem indirekten Massen-Messsystem (41) zur Bestimmung der ausgegebenen Produktmasse versehen ist, und dass durch Wiegen des befüllten Prüfcontainers (1) mittels der Wiegezelle (2) der Container-Wiegestation (33) eine Kalibrierung des indirekten Massen-Messsystems (41) vorgenommen wird.

10. Verfahren nach einem der Ansprüche 7 bis 9,
**dadurch gekennzeichnet, dass** der befüllte Prüfcontainer (1) aus der Kapselaufnahme (23) des Segmentunterteils (28) entnommen wird, dass dann der reguläre Betriebsmodus wieder aufgenommen wird, und dass der befüllte Prüfcontainer (1) mittels der Wiegezelle (2) der Container-Wiegestation (33) während des fortlaufenden Füllvorganges im regulären Betriebsmodus gewogen wird.

## Claims

1. Capsule filling machine (20), comprising a turntable (21) with capsule segments (22) for receiving capsules to be filled, at least one insertion station (31, 32) for inserting empty capsules into the capsule segments (22), and at least one filling station (34, 35, 36) for filling the capsules, wherein the capsule segments (22) each have a segment lower part (28) with capsule receptacles (23) for capsule lower parts (10) of the capsules,
**characterized in that** the capsule filling machine (20) comprises at least one test container (1), which is provided for recurrent use in the capsule filling machine (20), for placing on a capsule receptacle (23) of the segment lower part (28), and **in that** the capsule filling machine (20) further comprises a container weighing station (33) with a weighing cell (2) for weighing the test container (1).

2. Capsule filling machine according to claim 1,
**characterized in that** the test container (1) has an inner container volume (V_{C}) which is a multiple of an inner capsule volume (V_{K}) of a capsule lower part (10) to be filled.

3. Capsule filling machine according to claim 1 or 2,
**characterized in that** the capsule filling machine (20) is designed for a respective test container (1) to be inserted into a plurality of capsule receptacles (23) and in particular into all the capsule receptacles (23) of an individual segment lower part (28).

4. Capsule filling machine according to one of claims 1 to 3,
**characterized in that** the container weighing station (33) is designed for the sequential weighing of individual test containers (1).

5. Capsule filling machine according to one of claims 1 to 4,
**characterized in that** the container weighing station (33) has a transport head (4) which is mounted so as to be pivotable about a vertical pivot axis (3), wherein at least one telescopic arm (5) with a gripper (6) for a test container (1) is guided radially with respect to the pivot axis (3) in the transport head (4), and wherein a pivoting travel of the transport head (4) and a linear travel of the telescopic arm (5) are tailored to one another in such a way that the gripper (6) can be moved into the region of a capsule receptacle (23) and into the region of the weighing cell (2).

6. Capsule filling machine according to one of claims 1 to 5,
**characterized in that** the container weighing station (33) comprises a cleaning device (7) for the test container (1).

7. Method for operating a capsule filling machine according to one of claims 1 to 6, comprising the following method steps:
- in a regular operating mode, capsule lower parts (10) are inserted into a respective capsule receptacle (23) of a segment lower part (28) in an insertion station (31, 32), after which the capsule lower parts (10) in the segment lower part (28) are moved by means of the turntable (21) to the at least one filling station (34, 35, 36) and filled there with a product;
- in a testing mode, a test container (1) is placed on a capsule receptacle (23) of a segment lower part (28), after which the test container (1) on the segment lower part (28) is moved by means of the turntable (21) to the at least one filling station (34, 35, 36) and filled there with the product;
- the filled test container (1) is moved to the container weighing station (33) and weighed there by means of the weighing cell.

8. Method according to claim 7,
**characterized in that** the test container (1) is filled at the at least one filling station (34, 35, 36) with a multiple of the product quantity provided for a capsule filling, **in that** the test container (1) filled in such a way is weighed by means of the weighing cell (2) of the container weighing station (33), and **in that** an average mass of an individual actually dosed product quantity is determined therefrom.

9. Method according to claim 7 or 8,
**characterized in that** the at least one filling station (34, 35, 36) is provided with an indirect mass measuring system (41) for determining the output product mass, and **in that** a calibration of the indirect mass measuring system (41) is carried out by weighing the filled test container (1) by means of the weighing cell (2) of the container weighing station (33).

10. Method according to one of claims 7 to 9,
**characterized in that** the filled test container (1) is removed from the capsule receptacle (23) of the segment lower part (28), **in that** the regular operating mode is then resumed, and **in that** the filled test container (1) is weighed by means of the weighing cell (2) of the container weighing station (33) during the continuous filling operation in the regular operating mode.

## Revendications

1. Machine de remplissage de capsules (20), comprenant une table tournante (21) avec des segments (22) à capsules destinés à recevoir des capsules à remplir, au moins une station d'insertion (31, 32) destinée à insérer des capsules vides dans les segments (22) à capsules et au moins une station de remplissage (34, 35, 36) destinée à remplir les capsules, les segments (22) à capsules comportant chacun une partie inférieure (28) de segment avec des réceptacles de capsule (23) pour des parties inférieures (10) des capsules,
**caractérisée en ce que** la machine de remplissage de capsules (20) comprend au moins un récipient de contrôle (1) prévu pour être inséré de manière récurrente dans la machine de remplissage de capsules (20), destiné à être placé sur un réceptacle (23) de capsule de la partie inférieure (28) de segment, et **en ce que** la machine de remplissage de capsules (20) comprend en outre une station de pesage (33) de récipient avec une cellule de pesage (2) destinée à peser le récipient de contrôle (1).

2. Machine de remplissage de capsules selon la revendication 1,
**caractérisée en ce que** le récipient de contrôle (1) présente un volume intérieur de récipient (V_{c}), qui est égal à un multiple d'un volume intérieur de capsule (V_{K}) d'une partie inférieure (10) de capsule à remplir.

3. Machine de remplissage de capsules selon la revendication 1 ou 2,
**caractérisée en ce que** la machine de remplissage de capsules (20) est conçue pour insérer respectivement un récipient de contrôle (1) dans plusieurs réceptacles (23) de capsule et en particulier dans tous les réceptacles (23) de capsule d'une partie inférieure (28) individuelle de segment.

4. Machine de remplissage de capsules selon l'une des revendications 1 à 3,
**caractérisée en ce que** la station de pesage (33) de récipient est conçue pour peser séquentiellement divers récipients de contrôle (1).

5. Machine de remplissage de capsules selon l'une des revendications 1 à 4,
**caractérisée en ce que** la station de pesage (33) de récipient comporte une tête de transport (4) montée de manière à pouvoir pivoter autour d'un axe de pivotement (3) vertical, au moins un bras télescopique (5) avec un système de préhension (6) pour un récipient de contrôle (1) étant guidé radialement par rapport à l'axe de pivotement (3) dans la tête de transport (4), et un trajet de pivotement de la tête de transport (4) et un trajet linéaire du bras télescopique (5) étant adaptés l'un à l'autre de telle manière que le système de préhension (6) peut être amené dans la zone d'un réceptacle (23) de capsule et dans la zone de la cellule de pesage (2).

6. Machine de remplissage de capsules selon l'une des revendications 1 à 5,
**caractérisée en ce que** la station de pesage (33) de récipient comprend un dispositif de nettoyage (7) pour le récipient de contrôle (1).

7. Procédé de fonctionnement d'une machine de remplissage de capsules selon l'une des revendications 1 à 6,
comprenant des étapes de procédé suivantes:
- dans un mode de fonctionnement régulier, des parties inférieures (10) de capsule sont insérées dans respectivement un réceptacle (23) de capsule d'une partie inférieure (28) de segment dans une station d'insertion (31, 32), les parties inférieures (10) de capsule étant déplacées par la suite, dans la partie inférieure (28) de segment, au moyen de la table tournante (21) vers l'au moins une station de remplissage (34, 35, 36) et y étant remplies d'un produit;
- dans un mode de contrôle, un récipient de contrôle (1) est placé sur un réceptacle (23) de capsule d'une partie inférieure (28) de segment, le récipient de contrôle (1) étant déplacé par la suite, sur la partie inférieure (28) de segment, vers l'au moins une station de remplissage (34, 35, 36) au moyen de la table tournante (21) et y étant rempli du produit;
- le récipient de contrôle (1) rempli est déplacé vers la station de pesage (33) de récipient et y est pesé au moyen de la cellule de pesage.

8. Procédé selon la revendication 7,
**caractérisé en ce que** le récipient de contrôle (1) est rempli d'un multiple de la quantité de produit prévue pour remplir une capsule sur l'au moins une station de remplissage (34, 35, 36), **en ce que** le récipient de contrôle (1) ainsi rempli est pesé au moyen de la cellule de pesage (2) de la station de pesage (33) de récipient, et **en ce qu'**une masse moyenne d'une quantité individuelle de produit réellement dosée est déterminée sur cette base.

9. Procédé selon la revendication 7 ou 8,
**caractérisé en ce que** l'au moins une station de remplissage (34, 35, 36) est pourvue d'un système de mesure (41) de masse indirect destiné à déterminer la masse de produit distribuée, et **en ce que** le pesage du récipient de contrôle (1) rempli au moyen de la cellule de pesage (2) de la station de pesage (33) de récipient permet de réaliser un étalonnage du système de mesure (41) de masse indirect.

10. Procédé selon l'une des revendications 7 à 9,
**caractérisé en ce que** le récipient de contrôle (1) rempli est retiré du réceptacle (23) de capsule de la partie inférieure (28) de segment, **en ce qu'**alors le mode de fonctionnement régulier est repris, et **en ce que** le récipient de contrôle (1) rempli est pesé dans le mode de fonctionnement régulier au cours de l'opération de remplissage continu au moyen de la cellule de pesage (2) de la station de pesage (33) de contenant.
